# EUROPÄISCHE PATENTANMELDUNG

(11) **EP 2 157 346 A1**
(43) Veröffentlichungstag der Anmeldung: **24.02.2010**
(21) Anmeldenummer: 09010646.9
(22) Anmeldetag: 19.08.2009
(51) Int. Cl.: F16K 31/163, F16K 31/528

(54) **Bistabile Betätigungsvorrichtung für ein Ventil**

(30) Priorität: 20.08.2008 DE 102008038440
(71) Anmelder: KNORR-BREMSE Systeme für Nutzfahrzeuge GmbH, 80809 München (DE)
(72) Erfinder: Vollmer, Otto, 80689 München (DE); Mederer, Martin, 80797 München (DE)
(74) Vertreter: Mattusch, Gundula

(57) **Zusammenfassung**

Eine Betätigungsvorrichtung (15) für ein Drehschieberventil (12) mit mindestens zwei selbsthaltenden Betriebszuständen (SE, SB) umfasst eine Selbsthaltevorrichtung (99) mit einem drehbar gelagerten Rastierteil (20) und einem Verdrehteil (18). Das Verdrehteil ist dazu vorgesehen, das Rastierteil (20) während eines Betätigungsvorgangs zu drehen, wodurch das Rastierteil (20) ein drehbares Dichtungsteil (34) des Drehschiebers (14) dreht. Eine Drehbeweglichkeit des Verdrehteils (18) ist mittels einer Kulissenführung (58) festgelegt.

In einem Betätigungsverfahren für ein Drehschieberventil (12) mit mindestens zwei selbsthaltenden Betriebszuständen (SE, SB) erfolgt in einem ersten Schritt ein axiales Verschieben eines in einem Ventilgehäuse (24) gelagerten Verdrehteils (18). Das Verdrehteil (18) wird mittels Fortführung der axialen Verschiebung mit einem Rastierteil (20) verkoppelt. Mittels der Art der Lagerung (58) des Rastierteils (20) und weiterer Fortführung der Axialverschiebung werden das Verdrehteil (18) und das damit verkoppelte Rastierteil (20) gedreht.

## Beschreibung

Die Erfindung betrifft eine Betätigungsvorrichtung für ein Drehschieberventil mit mindestens zwei selbsthaltenden Betriebszuständen, wobei die Betätigungsvorrichtung eine Selbsthaltevorrichtung mit einem drehbar gelagerten Rastierteil und einem Verdrehteil umfasst, das dazu vorgesehen ist, das Rastierteil während eines Betätigungsvorgangs zu drehen, wodurch das Rastierteil ein drehbares Dichtungsteil des Drehschiebers dreht.

Außerdem betrifft die Erfindung ein Betätigungsverfahren für ein Drehschieberventil mit mindestens zwei selbsthaltenden Betriebszuständen.

In einigen Anwendungsbereichen - beispielsweise bei Ventilen für Feststellbremsen - ist ein Ventil mit mindestens zwei selbsthaltenden Betriebszuständen erwünscht. Dabei soll das Ventil auch ohne Anliegen eines Steuersignals in seinem zuletzt eingestellten Betriebszustand solange verharren, bis es ein erneutes Steuersignal zum Verändern des Betriebszustands erhält. Ein solches Ventil wird als bistabiles Ventil bezeichnet, wenn es genau zwei selbsthaltende Betriebszustände aufweist. Vom selben Anmelder wurde eine deutsche Patentanmeldung für ein bistabiles Ventil eingereicht, bei dem eine Hubbewegung eines Schiebeelements in eine Drehbewegung eines Tiefrastelements umgesetzt wird. Die Umsetzung der Hubbewegung in die Drehbewegung erfolgt mittels eines an dem Tiefrastelement angeordneten Zahnkranzes, wobei ein an dem Schiebeelement angeordneter Zahnkranz in den Zahnkranz des Tiefrastelements eingreift. Folglich bemisst sich hier eine Höhe des Zahnprofils nach einer Hubhöhe des Schiebeelements. Ein Zahnprofil mit einer derart großen Hubhöhe kann verschleißanfällig und aufwendig in der Herstellung sein.

Der Erfindung liegt die Aufgabe zugrunde, für ein Ventil eine gattungsgemäße Betätigungsvorrichtung bereitzustellen, welche eine geringere Verschleißanfälligkeit aufweist und weniger aufwendig in der Herstellung ist als die zuvor beschriebene Ventilbetätigungsvorrichtung.

Diese Aufgabe wird mit den Merkmalen der unabhängigen Ansprüche gelöst. Vorteilhafte Ausgestaltungen und Weiterbildungen der Erfindungen ergeben sich aus den abhängigen Ansprüchen.

Die vorliegende Erfindung baut auf einer gattungsgemäßen Betätigungsvorrichtung dadurch auf, dass eine Drehbeweglichkeit des Verdrehteils mittels einer Kulissenführung festgelegt ist. Mit dieser Art von Lagerung ist die Umsetzungsfunktion zwischen Hub- und Drehbewegung im Kurvengetriebe angeordnet. Unter Beachtung der erfindungsgemäßen Lehre ist es also nicht mehr erforderlich, die Höhe des Zahnprofils nach einer Hubhöhe des Schiebeelements zu bemessen und die genannten damit verbundenen Nachteile in Kauf zu nehmen. Durch den kompakten Aufbau und durch das Keramikscheibenprinzip werden Dichtungen, Ventilsitze usw. eingespart.

Eine vorteilhafte Weiterbildung sieht vor, dass das Drehschieberventil eine Fixierungsvorrichtung für das Rastierteil aufweist, die - insbesondere auf Seiten des Rastierteils - unabhängig von einer Kupplungsvorrichtung ausgebildet ist, mit der das Verdrehteil das Rastierteil während des Betätigungsvorgangs dreht.

Besonders bevorzugt ist es, wenn das Verdrehteil in einem Ventilgehäuse angeordnet ist, wobei das Ventilgehäuse eine Kulisse der Kulissenführung umfasst.

Ebenfalls bevorzugt ist es, wenn das Verdrehteil ein Führungsteil der Kulissenführung umfasst.

Auch kann es vorteilhaft sein, wenn das Verdrehteil in einem Ventilgehäuse angeordnet ist, wobei das Ventilgehäuse ein Führungsteil der Kulissenführung umfasst.

Auch kann vorgesehen sein, dass das Führungsteil der Kulisse eine Kugel ist.

Im Übrigen kann das Verdrehteil auf einem beweglichen Betätigungskolben beweglich gelagert sein.

Darüber hinaus kann auf dem Verdrehteil ein drehbares Dichtungsteil oder ein inneres Betätigungsteil des Ventils beweglich gelagert sein.

Schließlich ist es vorteilhaft, wenn zwischen dem Rastierteil und dem Verdrehteil eine Feder, insbesondere eine Druckfeder, angeordnet ist.

Außerdem kann eine Drehachse des Rastierteils im Wesentlichen parallel oder deckungsgleich zu einer Drehachse des drehbaren Dichtungsteils sein.

Die Erfindung baut dadurch auf dem gattungsgemäßen Verfahren auf, dass das Betätigungsverfahren folgende Schritte umfasst: Axiales Verschieben eines in einem Ventilgehäuse gelagerten Verdrehteils; Verkoppeln des Verdrehteils mit einem Rastierteil mittels Fortführung der axialen Verschiebung; Drehen des Verdrehteils und des damit verkoppelten Rastierteils mittels der Art der Lagerung des Rastierteils und einer weiteren Fortführung der Axialverschiebung.

Typischerweise weist das Ventil ein durchflussbeeinflussendes Teil auf, das zwischen mindestens einem Paar von Fluidanschlüssen einen Strömungswiderstand bereitstellt, dessen Höhe von der jeweiligen Betätigungsstellung abhängt. Zur Vereinfachung wird das durchflussbeeinflussende Teil im Folgenden als Drehschieber bezeichnet. Nur in einer besonders bevorzugten Ausführungsform wirkt der Drehschieber in einer der Betätigungsstellungen durchflusssperrend, so dass der Strömungswiderstand dann unendlich groß ist. Ein drehbares Dichtungsteil des Drehschiebers ist drehbar gelagert, wobei die Drehachse vorzugsweise parallel oder in Richtung zu einer Verdrehachse des Verdrehteils zeigt.

Die Erfindung wird nun mit Bezug auf die begleitenden Zeichnungen anhand einer besonders bevorzugten Ausführungsform beispielhaft erläutert.

Es zeigen:
- Figur 1: eine schematische, nicht maßstäbliche Ansicht eines Schnittes entlang einer Hauptachse eines erfindungsgemäßen Ventils;
- Figur 2: eine schematische, nicht maßstäbliche Seitenansicht einer Kupplungsvorrichtung des erfindungsgemäßen Ventils;
- Figur 3: eine schematische, nicht maßstäbliche Ansicht eines zur Hauptachse querverlaufenden Schnittes E-E durch einen Bereich des Ventils in dem Betätigungsaussparungen des Drehschiebers angeordnet sind;
- Figur 4: eine schematische, nicht maßstäbliche Ansicht eines zur Hauptachse querverlaufenden Schnittes A-A durch ein Ventilgehäuse mit einer Aufsicht auf eine darin befindliche drehbare Keramikscheibe;
- Figur 5: eine schematische, nicht maßstäbliche Ansicht eines zur Hauptachse querverlaufenden Schnittes B-B durch ein Ventilgehäuse mit einer Aufsicht auf eine darin befindliche nichtdrehbare Keramikscheibe mit Blickrichtung von einer Seite der drehbaren Keramikscheibe;
- Figur 6: eine schematische, nicht maßstäbliche Ansicht eines zur Hauptachse querverlaufenden Schnittes C-C durch ein Ventilgehäuse mit einer Aufsicht auf eine darin befindliche nichtdrehbare Keramikscheibe mit Blickrichtung aus einer von der drehbaren Keramikscheibe abgewandten Seite; und
- Figur 7: eine schematische, nicht maßstäbliche Ansicht X in Richtung einer Hauptachse des Ventils mit Blickrichtung aus einer der drehbaren Keramikscheibe abgewandten Seite.

In den folgenden Zeichnungen bezeichnen gleiche Bezugszeichen gleiche oder gleichartige Teile. Somit werden in der Beschreibung der Figuren jeweils Beschreibungsteile einer oder mehrerer anderer Figuren implizit mitgenutzt.

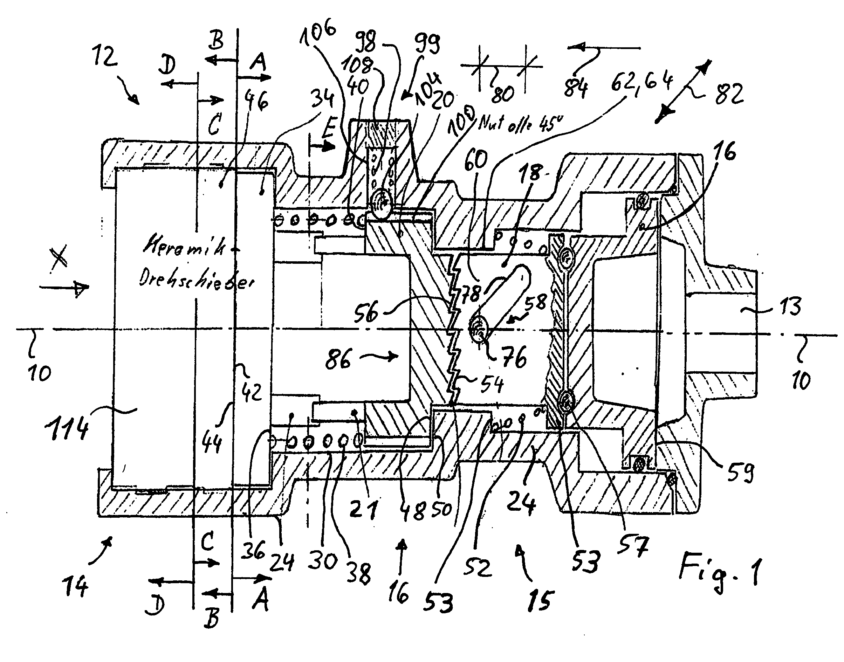

Fig. 1 zeigt einen Schnitt entlang einer Hauptachse 10 eines erfindungsgemäßen Ventils 12. Das Ventil 12 ist als Keramik-Drehschieber-Modul aufgebaut, der ein pneumatisches 3/2-Wegeventil ersetzen kann. Das Ventil 12 kann - nach einem Toggle-Prinzip - von einer Entlüftungsstellung SE in eine Belüftungsstellung SB und umgekehrt geschaltet werden. Im Folgenden wird zunächst die erfindungsgemäße Betätigungsvorrichtung 14 mit der Selbsthaltevorrichtung 99 beschrieben.

Das Schnittbild zeigt das Ventil 12, wenn am Anschluss 13 kein Druck ansteht. Das Ventil 12 umfasst den Drehschieber 14 und folgende vier mechanisch in Serie geschaltete Betätigungskomponenten: einen Steuerkolben 16, ein Verdrehteil 18, ein Rastierteil 20 und Betätigungsnasen 21. Typischerweise ist jede dieser Ventilkomponenten 14, 16, 18, 20, 21 von einem Teil eines Ventilgehäuses 24 umgeben. Typischerweise ist eine Innenwand 30 des Ventilgehäuses 24 so geformt, dass es zugleich auch für eine oder mehrere der Ventilkomponenten 14, 16, 18, 20, 21 die Funktion einer Führungshülse erfüllt. Ohne Anliegen eines fluidischen Drucks auf der Betätigungsseite können die Betätigungsnasen 21 mindestens zwei unterschiedliche Ruhestellungen einnehmen, die sich in einer Umfangswinkelstellung Betätigungsnasen 21 unterscheiden. Die Betätigungsnasen 21 greifen in Aussparungen 22 ein, die an einer drehbaren Keramikscheibe 34 des Drehschiebers 14 befestigt oder in ihr angeordnet sind. Die Aussparungen 22 können durch Zwischenräume zwischen Vorsprüngen 25 gebildet sein, die an dem drehbaren Dichtungsteil 34 des Drehschiebers 14 befestigt sind.

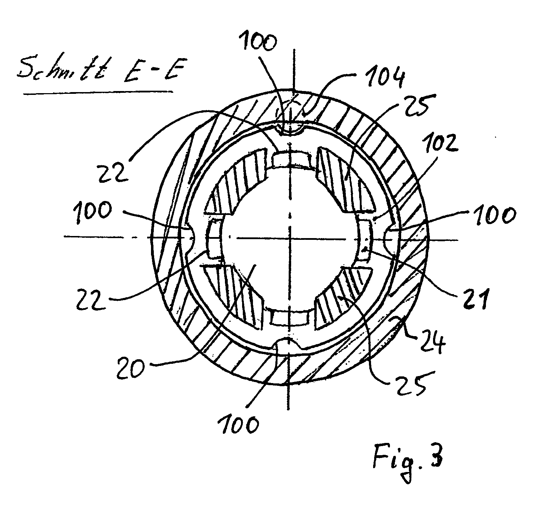

Fig. 3 zeigt eine schematische, nicht maßstäbliche Ansicht eines zur Hauptachse querverlaufenden Schnittes E-E durch einen Bereich des Ventils 12 in dem Betätigungsaussparungen 22 des Drehschiebers 14 angeordnet sind. Die Teile zur Betätigung des Drehschiebers 14 sind mit einer drehbaren Keramikscheibe 34 des Drehschiebers 14 mechanisch verbunden. Die drehbare Keramikscheibe 34 weist eine Schulter 36 auf, auf der sich eine erste Druckfeder 38 abstützt, die eine Flanke 40 des Rastierteils 20 von der Schulter 36 abspreizt und das drehbare Dichtungsteil 34 mit seiner Ventilhauptdichtfläche 42 gegen eine Dichtfläche 44 einer nichtdrehbaren Keramikscheibe 46 drückt. Dadurch, dass die Flanke 40 des Rastierteils 20 mittels der ersten Druckfeder 38 von der drehbaren Keramikscheibe 34 abgespreizt wird, wird das Rastierteil 20 in seiner Ruhestellung von der ersten Druckfeder 38 mit einer Schulter 48 gegen eine Flanke 50 gedrückt, die auf einer Innenseite des Ventilgehäuses 28 angeordnet ist.

Eine zweite Druckfeder 52 ist dazu vorgesehen, das Verdrehteil 18 während der Ruhestellung SE von dem Rastierteil 20 abzuspreizen. Dies wird dadurch bewirkt, dass eine Seite der Druckfeder 52 sich auf einer zweiten Flanke 53 abstützt, die auf einer Innenwand 30 des Ventilgehäuses 24 angebracht ist, während die andere Seite der Druckfeder 52 sich gegen einen Flansch 53 drückt, der mit dem Verdrehteil 18 verbunden ist. Die zweite Druckfeder 52 drückt das Verdrehteil 18 gegen einen Kugelkranz 57 eines Kugellagers drückt, und damit mittelbar auch gegen den Steuerkolben 16. Infolgedessen wird der Steuerkolben 16 in der Ruhestellung SE gegen eine innere Schulter 59 des Ventilgehäuses 24 geschoben.

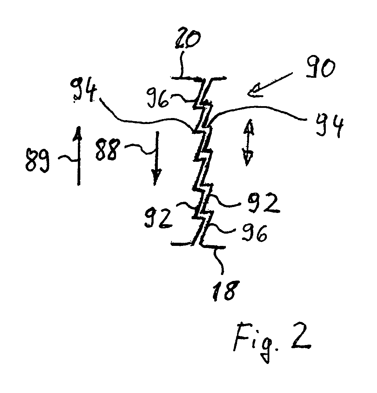

Zum Betätigen des Ventils 12 wird an den Steueranschluss 13 ein Steuerdruck eines Steuerfluids (beispielsweise ein pneumatischer oder hydraulischer Druck) angelegt. Spätestens beim Aufbau des Steuerdrucks wird die zweite Druckfeder 52 so weit zusammengepresst, dass sich das Verdrehteil 18 und das Rastierteil 20 an ihren Kupplungsflächen 54, 56 berühren. Es kann aber auch vorgesehen sein, dass sich die Kupplungsflächen 54, 56 immer berühren, und zwar unabhängig vom Betriebszustand des Ventils 12. Die Schubkraft, die von der ersten mechanischen Schnittstelle 57 ausgeht, wird mittels einer Kulissenführung 58, die in einem Bereich einer äußeren Umfangsfläche 60 des Verdrehteils 18 angeordnet ist, großteils in ein Drehmoment des Verdrehteils 18 umgesetzt, wodurch das Verdrehteil 18 gedreht wird. Die Kulissenführung 58 besteht beispielsweise aus einer in einer Wand 62 der Führungshülse 64 des Verdrehteils 18 zwar formschlüssig - jedoch beweglich - angeordneten Kugel 76 und aus einer in der äußeren Umfangsfläche 60 des Verdrehteils 18 angeordneten Kulisse 78. Zusätzlich oder alternativ ist auch eine umgekehrte Zuordnung von Kugel 76 und Kulisse 78 möglich. Vorzugsweise verläuft die Kulisse 78 im gesamten Hubbereich 80 in einer Richtung 82, die zwar nicht senkrecht, aber schräg zur Hubrichtung 90 gerichtet ist. Gleichzeitig mit einer weiteren Fortführung der Bewegung in Hubrichtung 84 wird das Rastierteil 20 zusätzlich auch gedreht. Dazu ist zwischen dem Verdrehteil 18 und dem Rastierteil 20 eine Kupplungsvorrichtung 86 (vorzugsweise je eine Kupplungsfläche 54, 56) vorgesehen, die zwischen dem Verdrehteil 18 und dem Rastierteil 20 in einer Drehrichtung 88 (siehe Fig. 2) eine ausreichend große Scherkraft bzw. ein ausreichend großes Drehmoment vermitteln kann. Das Ventil 12 umfasst ein Mittel 90, das dazu vorgesehen ist, zu verhindern, dass sich das Rastierteil 20 während desselben Hubbereichs 80, der eine Drehung des Rastierteils 20 in der einen Drehrichtung 88 ermöglichte, wieder in die vorherige Drehstellung zurückdreht. Dazu kann beispielsweise zwischen Rastierteil 20 und Ventilgehäuse 24 oder zwischen dem Verdrehteil 18 und dem Rastierteil 20 eine Sperrklinkenfunktion oder ein Freilauf 90 (Einwegkupplung) vorgesehen sein. Die Funktion eines Freilaufs 90 kann durch eine wie in Fig. 2 gezeigte sägezahnartige Verzahnung 92 mindestens einer der beiden Kupplungsflächen 54, 56 realisiert werden. Beispielsweise bleiben die beiden Kupplungsflächen 54, 56 für den ganzen oder zumindest für einen Großteil des Hubbereichs 80 in Berührung, während sich das Verdrehteil 18 in die Ruhestellung zurückzieht, genauer: von der zweiten Druckfeder 52 in die Ruhestellung geschoben wird. Wenn in dieser Drehrichtung der Standwiderstand des Rastierteils 20 geringer wäre als ein Reibungsmoment zwischen den beiden Kupplungsflächen 54, 56, würde das Rastierteil 20 beim Zurückziehen und
-drehen des Verdrehteils 18 das Rastierteil 20 ebenfalls zurückdrehen. Um dies zu vermeiden, sind die Kupplungsflächen 54, 56 sägezahnartig ausgebildet, damit sich die steilen Flanken 94 der Zähne 92 beider Kupplungsflächen 54, 56 beim Kupplungsvorgang nichtabrutschend hintergreifen können und bei der Betätigung jeweils eine Kraft in einer Tangentialrichtung und damit ein Drehmoment übertragen können. In der Freilaufdrehrichtung 89 jedoch sind die Zahnflanken 96 wesentlich flacher, so dass eine Berührung der flachen Zahnflanken 96 beider Kupplungsflächen 54, 56 dazu führt, dass die flachen Zahnflanken 96 aneinander abrutschen. Beim Gleiten der flachen Zahnflanken 96 wird das Rastierteil 20 kontinuierlich entgegen der Federkraft der ersten Druckfeder 38 etwas angehoben, bis ein Umfangswinkel einer vollen Zahnlänge durchlaufen wurde, so dass die Zähne 92 um eine volle Zahnlänge versetzt sind und wieder tief (d.h. vorzugsweise formschlüssig) ineinandergreifen können, also die Zähne 92 des Rastierteils 20 wieder in die Zähne 92 des Verdrehelements 18 zurückrutschen.

Um sicher zu sein, dass es - beispielsweise nach einer unbeabsichtigten Erhöhung eines Reibungskoeffizienten infolge einer Aufrauung oder eines Schmiermittelmangels - nicht trotzdem passiert, dass die Berührung der flachen Zahnflanken 96 eine Standreibung des Rastierteils 20 überwindet, umfasst das Ventil 12 vorzugsweise eine Vorrichtung 99, die zumindest in Ruhepositionen ein Drehmoment erzeugt, dass zumindest in Freilaufrichtung 89 (des Verdrehteils) einer Drehbewegung des Rastierteils 20 mit einer definierten Höhe des Drehmoments entgegenwirkt. Es ist also wichtig, dass ein Fixierungsmoment der Lagerung des Rastierteils 20 größer ist als ein Mitnahmemoment des Freilaufs 90 in Freilaufrichtung 89. Dies wird bei dem in der Figur gezeigten Ausführungsbeispiel wie folgt erreicht.

Fig. 3 zeigt eine optionale Fixierungsvorrichtung 99. Hierbei werden bestimmte Drehwinkel α (hier 0°, 90°, 180°, 270°) des Rastierteils 20 dadurch bevorzugt, dass eine dritte Druckfeder 98 aufgrund einer dellenartigen Ausformung 100 einer Rastscheibe 102 bei einem Drehwinkel α, in denen eine durch die dritte Druckfeder 98 vorgespannte Kugel 104 in die dellenartige Ausformung 100 teilweise einrücken kann und damit energetisch günstigeren, d.h. entspannteren, Zustand einnehmen kann. Fig. 3 zeigt einen Schnitt dieser Ausführungsform in der Entlüftungsstellung SE, in der die Rastscheibe 102 mit dem Rastierelement 20 eine mechanisch fest verbundenen Baueinheit bildet, wobei die (in Fig. 3 nicht dargestellte) dritte Druckfeder 98 und die vorgespannte Kugel 104 in einer Bohrung 106 des Ventilgehäuses 24 unter einer Schraube 108 fixiert sind. Die dellenartigen Aussparungen 100 sind in Axialrichtung der Hauptachse 10 in Ruhe- und/oder Betriebsdrehpositionen des Rastierteils 20 unterhalb der Bohrung 106 angeordnet. Dabei kann ein Teil des Fixierungsteils 104 aus der Bohrung 106 hervortreten und in die dellenartige Aussparung 100 eintreten. Damit kann die dritte Druckfeder 98 in den Ruhe- und/oder Betriebsdrehpositionen einen entspannteren, d.h. energieärmeren und damit stabileren Zustand einnehmen als in den Umfangswinkelstellungen des Rastierteils 20, in denen sich unter der Bohrung 106 keine solche dellenartige Aussparung 100 befindet. Das Verdrehteil 18 muss also zum Herausdrehen des Rastierteils 20 aus einer solchen stabilen Ruhe- bzw. Betriebsdrehposition (entgegen der Druckkraft der dritten Druckfeder 98) ein Drehmoment aufwenden, dessen Höhe mit der Justierschraube 108 eingestellt werden kann. Auf diese Weise wird ein unbeabsichtigtes Drehen des Rastierteils 20 in Freilaufrichtung 89 des Verdrehteils 18 verhindert. Beim Drehen des Rastierteils 20 dreht sich eine Aussparung 100, in die die Kugel 104 eingerastet ist, unter dem Fixierungsteil 104 weg. Dabei rückt je nach Beabstandung der Aussparung eine andere oder sogar dieselbe Aussparung 100 nach, in die das Fixierungsteil 104 dann wieder einrastet.

In einer Ventilstellung, in der - ausgehend von dem vorbeschrieben Ventilzustand - der Steuerdruck am Steueranschluss 13 des Ventils 12 abgebaut wurde, presst der Steuerdruck die zweite Druckfeder 52 nicht mehr zusammen; und das Verdrehteil 18 sowie mittelbar der Steuerkolben 16 werden durch die zweite Druckfeder 52 in die in der Figur gezeigte Ruhestellung geschoben. Sobald am Steueranschluss 13 wieder ein ausreichender Steuerdruck angelegt wird, ist der Ablauf so, wie zu Fig. 1 beschrieben.

Nun wird eine Drehschieber 14 beschrieben, der zusammen mit der erfindungsgemäßen Betätigungsvorrichtung 15 ein bistabiles Ventil 12 bildet. Die Betätigungsvorrichtung 15 kann aber auch für nahezu jede andere Art von Stellglied 14 sinnvoll eingesetzt werden, das mittels einer schrittweisen Drehbewegung eines drehbaren Teils 20 in eine feste Drehrichtung 88 betätigt wird.

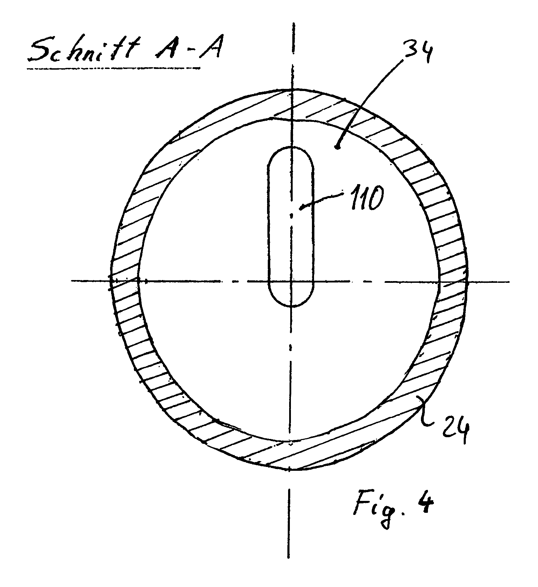

Figur 4 zeigt eine schematische, nicht maßstäbliche Ansicht eines zur Hauptachse 10 querverlaufenden Schnittes A-A durch ein Ventilgehäuse 24 mit Aufsicht auf eine darin befindliche drehbare Keramikscheibe 34. Eine Aussparung 110 der drehbaren Keramikscheibe 34 verbindet in einer ersten, dritten, fünften und neunten Umfangswinkelstellung der drehbaren Keramikscheibe 34 die Bohrungen A2 und A3 einer nichtdrehbaren Keramikscheibe 46 und damit auch Leitungsanschlüsse C2 und C3.

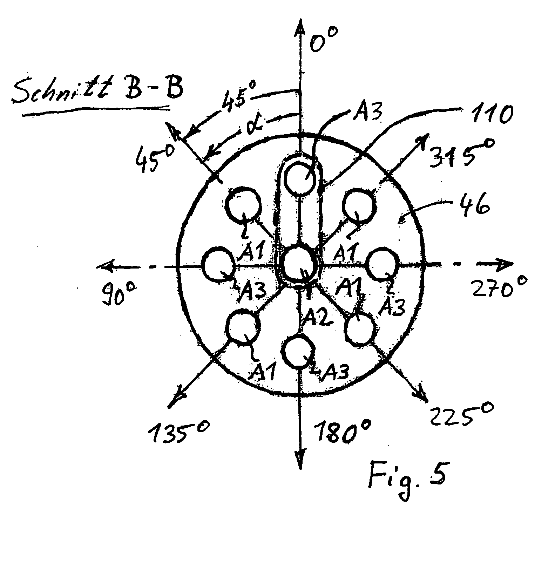

Figur 5 zeigt eine schematische, nicht maßstäbliche Ansicht eines zur Hauptachse 10 querverlaufenden Schnittes B-B mit Aufsicht auf eine darin befindliche nichtdrehbare Keramikscheibe 46 mit Blickrichtung von einer Seite der drehbaren Keramikscheibe 34. Diese Seite der nichtdrehbaren Keramikscheibe 46 weist die sternförmig angeordneten Bohrungen A1, A2, A3 auf.

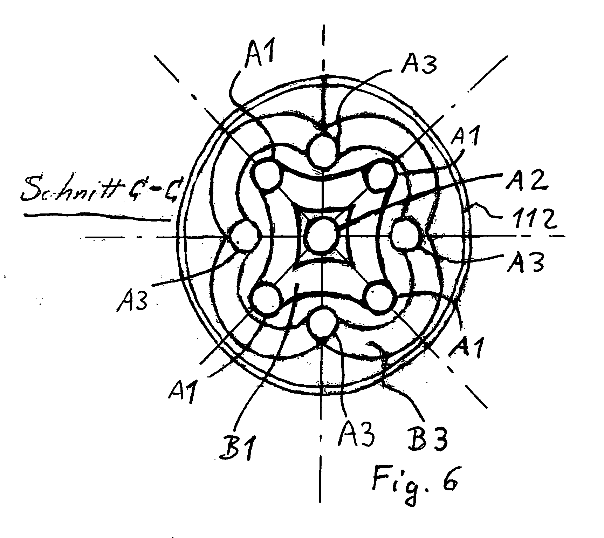

Figur 6 zeigt eine schematische, nicht maßstäbliche Ansicht eines zur Hauptachse 10 querverlaufenden Schnittes C-C mit Aufsicht auf eine darin befindliche nichtdrehbare Keramikscheibe 46 mit Blickrichtung von einer der drehbaren Keramikscheibe 34 abgewandten Seite. Auf dieser Seite der nichtdrehbaren Keramikscheibe 46 ist zu erkennen, wie die Anschlüsse A1 untereinander mittels einer Art Ringkanal B1 miteinander verbunden sind. Gleiches gilt für die Anschlüsse A3 und den Ringkanal B3. Die nichtdrehbare Keramikscheibe 46 weist in Richtung zu den Anschlüssen C1 bis C3 eine Nut 112 für eine statische Abdichtung zwischen den beiden fest fixierten Scheiben 46 und 114 auf.

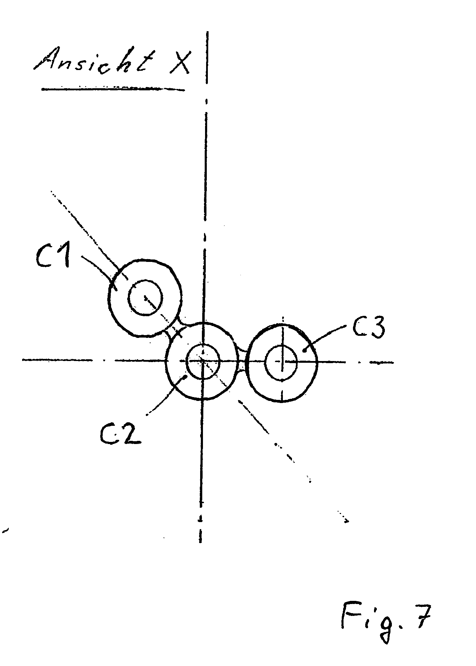

Figur 7 zeigt eine schematische, nicht maßstäbliche Ansicht X in Richtung einer Hauptachse 10 des Ventils 12 mit Blickrichtung von einer von der drehbaren Keramikscheibe 34 abgewandten Seite. Hier sind ein Anschluss C1 für eine Vorratsleitung, ein Anschluss C2 für eine Verbraucherleitung und eine Anschluss C3 für eine Entlüftungsleitung herausgeführt.

Das fluidische Betätigungssignal ist typischerweise ein pneumatisches Druck- oder Unterdrucksignal oder ein hydraulisches Druck- oder Unterdrucksignal. Abweichend von den Ausführungsformen der Figuren können die zur Betätigung erforderlichen mechanischen Betätigungsimpulse auch durch nichtfluidische Krafteinwirkung, beispielsweise mittels eines Elektromagneten erzeugt werden. Unabhängig davon kann bei entsprechender Umgestaltung der Angriffspunkte statt der ersten 38, zweiten 52 und/oder dritten 98 Druckfeder jeweils auch eine Zugfeder verwendet werden. Statt der Kugeln 76 und/oder 104 können auch anders geformte Körper, beispielsweise zylinderförmige Körper, verwendet werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Hauptachse
- 12: Ventil
- 13: Steueranschluss
- 14: Drehschieber; durchflussbeeinflussendes Teil; Stellglied
- 15: Betätigungsvorrichtung
- 16: Betätigungskolben; Steuerkolben
- 18: Verdrehteil
- 20: Rastierteil
- 21: Betätigungsnasen
- 22: Aussparung
- 24: Ventilgehäuse
- 25: Vorsprünge
- 26: Führungshülse
- 28: Schulter der Führungshülse 26
- 30: Innenwand des Ventilgehäuses 24
- 34: drehbares Dichtungsteil des Drehschiebers 14; Keramikscheibe
- 36: Schulter des drehbaren Dichtungsteils 34
- 38: erste Druckfeder
- 40: Flanke des Rastierteils 20
- 42: Dichtungsfläche des drehbaren Dichtungsteils
- 44: Dichtungsfläche des nichtdrehbaren Dichtungsteils 46 nichtdrehbares Dichtungsteil; Keramikscheibe
- 50: Flanke
- 52: zweite Druckfeder
- 53: Flansch
- 54: Kupplungsfläche des Verdrehteils 18
- 56: Kupplungsfläche des Rastierteils 20
- 57: Kugelkranz
- 58: Kulissenführung
- 59: Schulter des Ventilgehäuses 24
- 60: äußere Umfangsfläche des Verdrehteils 18
- 62: Wand der Führungshülse 64
- 64: Führungshülse
- 76: Führungsteil der Kulissenführung 58; Kugel
- 78: Kulisse
- 80: Hubbereich
- 82: Richtung der Kulisse 78
- 84: Hubrichtung
- 86: Kupplungsvorrichtung
- 88: Drehrichtung
- 89: Freilaufrichtung
- 90: Freilauf
- 92: Verzahnung, Zähne
- 94: steile Flanken der Zähne
- 96: flache Zahnflanken
- 98: dritte Druckfeder
- 99: Fixierung
- 100: dellenartige Aussparung
- 102: Rastscheibe
- 104: vorgespannte Kugel, Fixierungsteil
- 106: Bohrung
- 108: Schraube
- 110: Aussparung der drehbaren Keramikscheibe 34
- 112: Nut
- 114: Anschlussscheibe
- A1: Bohrung 1 (für Vorratsanschluss)
- A2: Bohrung 2 (für Verbraucheranschluss)
- A3: Bohrung 3 (für Entlüftungsanschluss)
- B1: Ringkanal 1 (für Verbraucheranschluss)
- B3: Ringkanal 3 (für Entlüftungsanschluss)
- C1: Drehschieberanschluss 1 (Vorratsanschluss)
- C2: Drehschieberanschluss 2 (Verbraucheranschluss)
- C3: Drehschieberanschluss 3 (Entlüftungsanschluss)

## Patentansprüche

1. Betätigungsvorrichtung (15) für ein Drehschieberventil (12) mit mindestens zwei selbsthaltenden Betriebszuständen (SE, SB), wobei die Betätigungsvorrichtung (15) eine Selbsthaltevorrichtung (99) mit einem drehbar gelagerten Rastierteil (20) und einem Verdrehteil (18) umfasst, das dazu vorgesehen ist, das Rastierteil (20) während eines Betätigungsvorgangs zu drehen, wodurch das Rastierteil (20) ein drehbares Dichtungsteil (34) des Drehschiebers (14) dreht, **dadurch gekennzeichnet, dass** eine Drehbeweglichkeit des Verdrehteils (18) mittels einer Kulissenführung (58) festgelegt ist.

2. Betätigungsvorrichtung (15) gemäß Anspruch 1, **dadurch gekennzeichnet, dass** das Drehschieberventil (12) eine Fixierungsvorrichtung (99) für das Rastierteil (20) aufweist, die - insbesondere auf Seiten des Rastierteils (20) unabhängig von einer Kupplungsvorrichtung (86) ausgebildet ist, mit der das Verdrehteil (18) das Rastierteil (20) während des Betätigungsvorgangs dreht.

3. Betätigungsvorrichtung (15) gemäß Anspruch 1 oder 2, **dadurch gekennzeichnet, dass** das Verdrehteil (18) in einem Gehäuse (24) angeordnet ist, das eine Kulisse (78) der Kulissenführung (58) umfasst.

4. Betätigungsvorrichtung (15) gemäß Anspruch 1 bis 3, **dadurch gekennzeichnet, dass** das Verdrehteil (18) ein Führungsteil (76) der Kulissenführung (58) umfasst.

5. Betätigungsvorrichtung (15) gemäß einem der Ansprüche 1 bis 4, **dadurch gekennzeichnet, dass** das Verdrehteil (18) in einem Gehäuse (24) angeordnet ist, das ein Führungsteil (76) der Kulissenführung (58) umfasst.

6. Betätigungsvorrichtung (15) gemäß einem der Ansprüche 1 bis 5, **dadurch gekennzeichnet, dass** das Führungsteil (76) der Kulissenführung (58) eine Kugel (76) ist.

7. Betätigungsvorrichtung (15) gemäß einem der Ansprüche 1 bis 6, **dadurch gekennzeichnet, dass** das Verdrehteil (18) auf einem beweglichen Betätigungskolben (16) beweglich gelagert ist.

8. Betätigungsvorrichtung (15) gemäß einem der Ansprüche 1 bis 7, **dadurch gekennzeichnet, dass** zwischen dem Rastierteil (20) und dem drehbaren Dichtungsteil (34) eine Feder (38), insbesondere eine Druckfeder (38), angeordnet ist.

9. Betätigungsvorrichtung (15) gemäß einem der Ansprüche 1 bis 8, **dadurch gekennzeichnet, dass** eine Drehachse (10) des Rastierteils (20) im Wesentlichen parallel oder deckungsgleich zu einer Drehachse (10) des drehbaren Dichtungsteils (34) ist.

10. Betätigungsverfahren für ein Drehschieberventil (12) mit mindestens zwei selbsthaltenden Betriebszuständen (SE, SB), **dadurch gekennzeichnet, dass** das Betätigungsverfahren folgende Schritte umfasst:
- Axiales Verschieben eines in einem Ventilgehäuse (24) gelagerten Verdrehteils (18);
- Verkoppeln des Verdrehteils (18) mit einem Rastierteil (20) mittels Fortführung der axialen Verschiebung;
- Drehen des Verdrehteils (18) und des damit verkoppelten Rastierteils (20) mittels der Art der Lagerung (58) des Rastierteils (20) und einer weiteren Fortführung der Axialverschiebung.
